# EUROPEAN PATENT APPLICATION

(11) **EP 4 725 730 A1**
(43) Date of publication of application: **15.04.2026**
(21) Application number: 25202992.1
(22) Date of filing: 18.09.2025
(51) Int. Cl.: B60K 1/02, F16H 37/04

(54) **ELECTRIC AXLE FOR AN INDUSTRIAL OR COMMERCIAL VEHICLE**

(30) Priority: 08.10.2024 IT 202400022323
(71) Applicant: FPT Industrial S.p.A., 10156 Torino (IT)
(72) Inventor: PESOLA, Fabio, 10156 Torino (IT); DI MONACO, Francesco, 10156 Torino (IT); ESPOSITO, Pietro, 10156 Torino (IT); CANTONE, Francesco, 10156 Torino (IT); TESSITORE, Marco, 10156 Torino (IT); PACELLA, Giuseppe, 10156 Torino (IT)
(74) Representative: Fiume, Orazio

(57) **Abstract**

Electric axle (EA) for industrial or commercial vehicle comprising a differential (Dif) equipped with an input port and half-shafts (HS) to drive in rotation the same number of vehicle wheels (W), a first electric machine (EM1, EM2) having a drive shaft on which a first pinion (P) is keyed to transmit the motion to the input port of the differential, a first intermediate shaft (ChS, ChS2), in which the first intermediate shaft comprises a shaft (S1) on which an input wheel (IN) is fixed operatively associated with said pinion (P) and a first (1) and a second transmission wheel (2) are keyed rotatably, and a selection device (CL) is provided to lock in rotation alternatively said first or second transmission wheel with the shaft (S1), an epicyclic gear train (PG) coaxial with said half-shafts (HS) comprising a single output port (SC) coinciding with said input port of the differential, a first input port (3) operationally connected to the first drive wheel (1) and a second input port (4) operationally connected to the second drive wheel (2).

## Description

### Field of the invention

The present invention relates to the field of electric propulsion systems, particularly in the field of industrial and commercial vehicles equipped with a dual-motor electric axle.

The electric axle of the present invention belongs to the category of axles known as off-axis, in that the rotation axis of the one or more electric propulsion machines is parallel but not coaxial with the axle shafts that define the axle.

### State of the art

Commercial and industrial vehicles are undergoing a massive electrification process, replacing internal combustion engines or integrating them with electric motors. Industrial and commercial vehicles are designed to maximize cargo space, so one of the key aspects is the design of compact and robust axles.

Furthermore, these vehicles require significant torque/power, and to achieve this torque/power, transmissions must ensure a high gear ratio or the use of two electric motors.

It is therefore not easy to balance compactness and a high gear ratio, or the arrangement of two electric motors and the transmission, with respect to vehicle constraints. More specifically, industrial and commercial vehicles require high axle efficiency at highway speeds, i.e., when there is a low gear ratio between the electric motor shaft and the wheel hubs, limiting the number of wheels engaging as much as possible in this specific driving condition.

### Summary of the invention

The purpose of this invention is to present a particularly compact, single- or dual-motor electric axle for industrial or commercial vehicles, capable of ensuring a high transmission ratio in one operating condition and high efficiency in another operating condition, when the transmission ratio is low.

The basic idea of this invention is to implement a planetary gearset as a reduction stage connected to a differential, coaxial with the axle. The planetary gearset has two distinct inputs and an output operationally connected to the axle differential input. An intermediate shaft is equipped with two gear wheels operationally associated with the two distinct inputs of the planetary gearset and selectively selectable by making them integral for rotation with the intermediate shaft, so as to alternately operate one of the two distinct inputs of the planetary gearset.

The intermediate shaft is driven in rotation by an input gear operatively associated with a pinion fitted onto the rotor of an electric machine, thus creating a first reduction ratio.

Preferably, the electric axle is equipped with two separate electric machines operatively connected to the input port of the differential via respective and distinct intermediate shafts.

The intermediate shafts may be similar, in the sense that they retain the same number of components and mutual arrangement, but define different transmission ratios, or they may be identical to each other.

The dependent claims describe preferred variants of the invention and form an integral part of this specification..

### Brief description of the figures

Further purposes and advantages of the present invention will become clear from the following detailed description of an embodiment thereof (and variations thereof) and the accompanying drawings, provided purely for explanatory and non-limiting purposes, in which:
Figure 1 shows an example of a propulsion scheme that is the subject of the present invention;
Figure 2 shows a portion of the scheme of Figure 1, and
Figure 3a shows a first variation of the portion of Figure 2 applicable to the scheme of Figure 1, and
Figures 3b-3d show further variations of the portion of Figure 2 applicable to the scheme of Figure 1.

The same reference numbers and letters in the figures identify the same elements, components, or functions.

It should also be noted that the terms "first," "second," "third," "upper," "lower," and the like may be used here to distinguish various elements. These terms do not imply a spatial, sequential, or hierarchical order for the modified elements unless specifically indicated or inferred from the text.

The elements and features illustrated in the various preferred embodiments, including the drawings, may be combined with each other without departing from the scope of protection of this application as described below.

### Detailed description of preferred embodiments

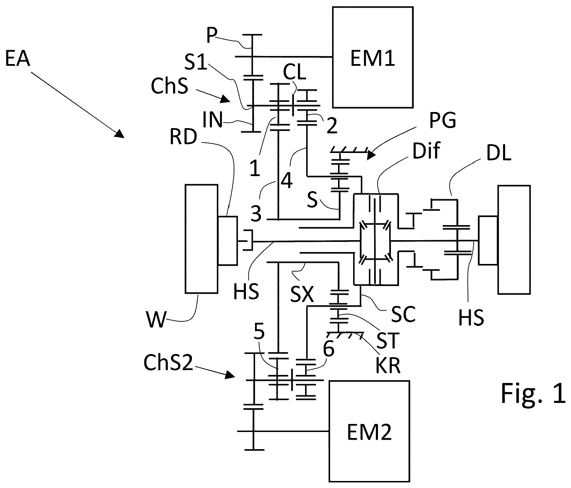

Figure 1 shows a preferred layout of the electric axle EA of the present invention.

The axle is defined by the two half-shafts HS arranged to rotate their respective wheels W.

The half-shafts are connected to the differential Dif, for rotational drive.

A planetary gear PG is configured coaxially with one of the half-shafts HS. The planetary carrier SC is operationally connected to the input of the differential Dif and, in particular, is connected to the differential housing or is made integral with it.

The planetary carrier is fitted with planetary gears ST, preferably at least three, arranged to mesh
- on an internally toothed ring gear KR fixed to a casing (not shown) of the electric axle EA and
- on a sun gear S.

The sun gear and the planetary carrier define two distinct inputs of the planetary gear.

In the above-described epicyclic gear configuration, rotating the sun gear achieves the maximum possible reduction ratio generated by the combination of the number of crown and sun gear teeth.

The epicyclic gear is coaxial with the half-shafts, as the corresponding sun gear S and the planet carrier SC are configured to rotate around an axis coaxial with the half-shafts HS.

Since the planet carrier simultaneously defines one input and the only output of the epicyclic gear, this means that when the planet carrier is selected as the input, it bypasses the epicyclic gear, meaning no change in the transmission ratio due to the epicyclic gear itself.

The sun gear S is mounted on a hollow shaft SX coaxial with one of the half-shafts HS.

The planet carrier also defines, at least partially, a hollow shaft coaxial and external to the shaft SX.

A gear 4 is connected to the planet carrier, and a gear 3 is connected to the hollow shaft SX of the solar system. The two gears 3 and 4 are parallel and preferably side by side, although they may have different diameters.

The intermediate shaft ChS is arranged parallel to the half-shafts HS and serves to connect the drive shaft of the electric machine EM1 to one of the inputs of the epicyclic gear train.

The intermediate shaft ChS comprises an axle or shaft S1, to which an input gear IN is fixed, which is associated with the pinion P of the electric machine EM1. Two gears 1 and 2 are fitted to the intermediate shaft, arranged to mesh with gears 3 and 4, respectively, which define the separate inputs of the epicyclic gear train.

Wheels 1 and 2 are free to rotate relative to shaft S1. However, a CL selection device, such as a non-absolute quick-engagement system with face or radial teeth called a "dog clutch," allows wheel 1 or 2 to be selected, making it integral for rotation with shaft S1. This CL selection device can also consist of an absolute friction cone synchronization clutch or any type of clutch selection and engagement device.

When wheel 2 is selected, motion is transmitted to the differential via the planetary gear carrier, therefore without any reduction in the epicyclic gearing, effectively creating the transmission's highest gear.

Conversely, when wheel 1 is selected, motion is transmitted to the differential via the sun gear, the planetary gears, and therefore the planetary gear carrier. Only in this operating condition does the epicyclic gearing reduce rotation speed, effectively creating the transmission's lowest gear.

In this way, two distinct overall reduction ratios are created between the EM1 or EM2 electric motor and the differential, i.e., two distinct gears: a first and a second gear.

Advantageously, the epicyclic gear train is used as the first gear to obtain a high transmission ratio when the vehicle is stationary or nearly stationary, thus obtaining high drive torque at the wheels when the vehicle starts. Conversely, at highway speeds, the epicyclic gear train is bypassed, as torque passes only through the planetary carrier, significantly reducing losses due to the number of gears meshing with each other. This results in second gear having a lower reduction ratio than first gear, thus resulting in high system efficiency.

Preferably, as can be seen in Figure 1, the scheme can be dual electric motor and symmetrical, meaning that the second electric motor EM2 is connected to the common differential via a second intermediate shaft ChS2, schematically identical or similar to the intermediate shaft ChS described above.

Obviously, transmission wheels 5 and 6 of the second intermediate shaft ChS2 are operationally associated with wheels 3 and 4 of the same epicyclic gear train PG, which is common to both electric motors EM1 and EM2. However, the transmission ratios achieved by the intermediate shaft ChS2 in association with wheels 3 and 4 may be different from those achieved by the intermediate shaft CHS in association with the same wheels 3 and 4.

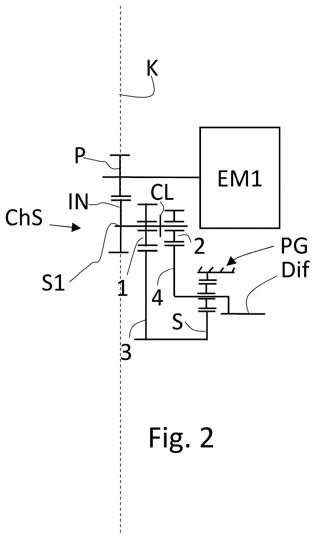

Figure 2 shows a portion of the diagram in Figure 1.

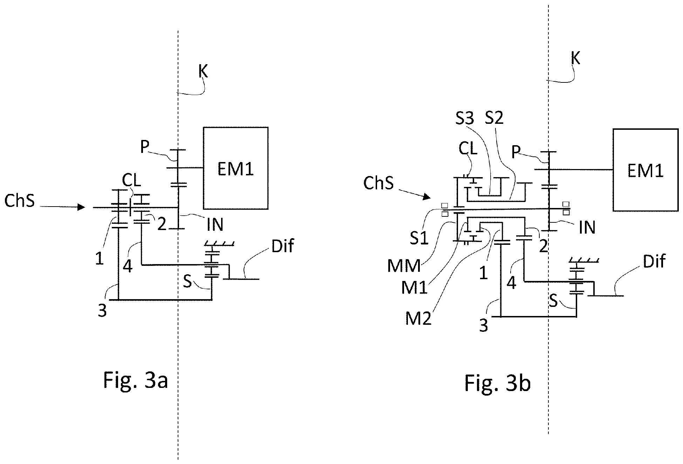

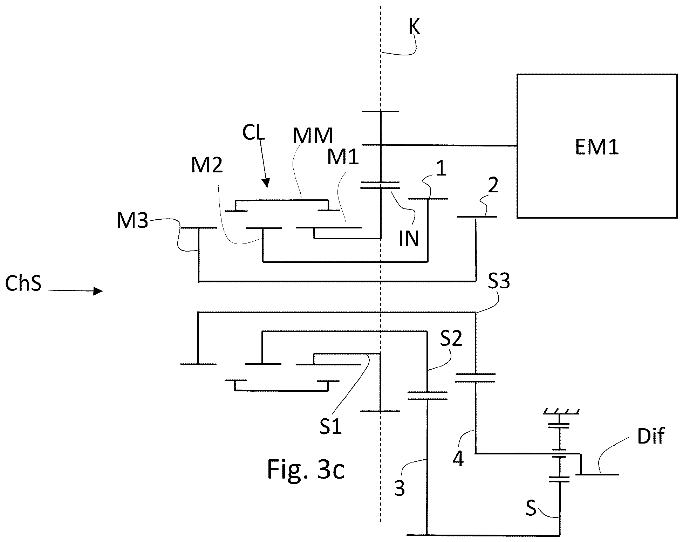

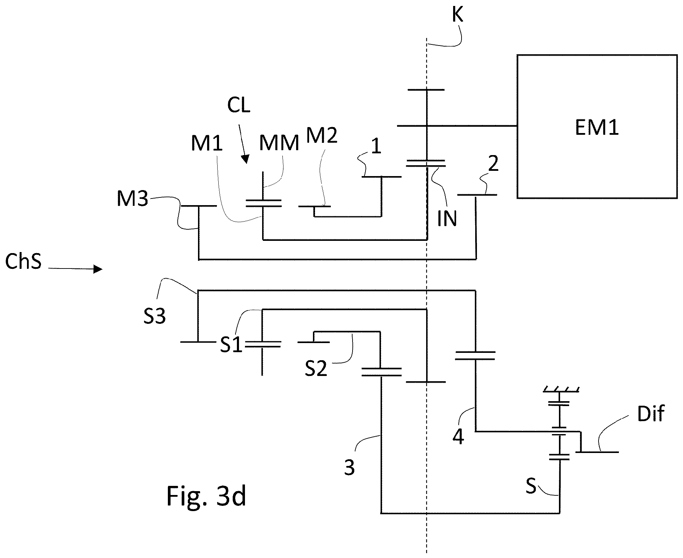

Figure 2 serves as a comparison with the variants in Figures 3a, 3b, 3c, and 3d, which essentially concerns the configuration of the intermediate shaft.

According to Figure 2, the input gear IN of the intermediate shaft and the pinion P define a plane of arrangement K. Gears 1 and 2, keyed to the shaft ChS, and the differential Dif are in the same half-space defined by the plane K.

The configuration in Figure 3a is very similar to the configuration in Figure 2, except that the plane of arrangement K defines two half-planes, in which wheels 1 and 2 are arranged in the first half-space and the differential and, preferably, also the electric machine EM1 and/or EM2 are arranged in the second half-space.

Figure 3b also shows a substantially reversed variant of Figure 2 regarding the positioning of wheels 1 and 2 with respect to the input gear IN. With respect to the plane K, wheels 1 and 2 are located in the opposite half-space to the differential and also to the electric machine EM1.

Figure 3b also shows a different scheme in terms of the selection device CL.

While Figures 2 and 3a show a selection device located between wheels 1 and 2, in Figure 3b, this device is mounted externally to wheels 1 and 2 for easier maintenance of the EA axle and a different spatial arrangement of the components, useful for installing the axle itself in the vehicle, for example, near its suspension components. According to Figure 3b, the intermediate shaft ChS1 comprises a first shaft S1 to which the input wheel IN is fixed at one end and the sliding sleeve MM at a second end opposite the first.

On the hollow shaft S2, coaxial and external to shaft S1, wheel 2 is fixed at one end and the hub M2 at the other end. Wheel 2 is arranged to mesh with wheel 4 connected to the planetary carrier of the epicyclic gear train and therefore to the input port of the differential.

On the hollow shaft S3, coaxial and external to the hollow shaft S2, the wheel 1 is fixed at one end and the hub M1 at the other end. The wheel 1 is arranged to mesh with the wheel 3 connected to the sun gear S of the epicyclic gear train.

The CL selection device, in this case, is configured as a sliding MM sleeve capable of selectively rotating the S1 shaft with either the M2 hub or the M1 hub. "Or" means that the M2 and M1 hubs cannot be simultaneously connected to the MM hub.

Figure 3b shows that the CL selection device is located at the opposite end of the S1 shaft with respect to the IN input gear, making the CL selection device easily accessible from outside the housing (not shown).

According to Figure 3b, the first intermediate shaft ChS and/or ChS2 comprises:
- said first shaft S1, to which said input gear IN is fixed at a first end and a sliding sleeve MM at a second end opposite the first,
- a first hollow shaft S2, coaxial and external to shaft S1, to which the second drive gear 2 is fixed at a first end and a first hub M1 at a second end, opposite the first,
- a second hollow shaft S3, coaxial and external to the first hollow shaft S2, to which the first drive gear 1 is fixed at a first end and a second hub M2 at a second end, opposite the first,
- the selection device CL, comprising said sliding sleeve MM suitable for selectively rotating the shaft S1 with the first hub M1 or with the second hub M2.

The solution in Figure 3c is very similar to the solution in Figure 3b. The solution in Figure 3c shares a similar selection device CL with Figure 3b. The difference lies in the position of the input wheel IN, which is located between the selection device CL and wheels 1 and 2, and the fact that the sleeve CL distributes the torque from the external wheel IN to wheels 1 and 2. Therefore, the plane K identifies a first half-space in which only the selection device is located and another half-space in which wheels 1 and 2 are housed, as well as the differential Dif. Preferably, the first electric machine EM1 is also located in the other half-plane.

According to Figure 3c, the intermediate shaft comprises:
- said first hollow shaft S1, to which said input gear IN is fixed at a first end and a first hub M1 at a second end opposite the first,
- a second hollow shaft S2, coaxial and internal to the first hollow shaft S1, to which the first drive gear 1 is fixed at a first end and a second hub M2 at a second end, opposite the first,
- a third shaft S3, coaxial and internal to the first and second hollow shafts, to which the second drive gear 2 is fixed at a first end and a third hub M3 at a second end, opposite the first,
- the selection device CL, comprises a sliding sleeve MM suitable for selectively rotating the first hub M1 with the second hub M2 or the third hub M3.

The solution shown in Figure 3d is a further variant in which the input wheel IN is located between the two wheels 1 and 2.

Therefore, the plane K identifies a first half-space containing only the selection device and one of the two wheels 1 or 2, and a second half-space containing the other wheel 2 or 1 and the first electric machine EM1, and preferably also the differential Dif.

In this variant, the corresponding wheels 3 and 4 are not placed side by side as it is necessary to leave a space corresponding to the input wheel IN.

With reference to Figure 3d, the intermediate shaft comprises:
- said first hollow shaft S1, to which said input gear IN is fixed at a first end and a first hub M1 at a second end opposite the first,
- a second hollow shaft S2, coaxial and external to the first hollow shaft S1, to which the first drive gear 1 is fixed at a first end and a second hub M2 at a second end, opposite the first,
- a third shaft S3, coaxial and internal to the first and second hollow shafts, to which the second drive gear 2 is fixed at a first end and a third hub M3 at a second end, opposite the first,
- the selection device CL comprises a sliding sleeve MM suitable for selectively rotating the first hub M1 with the second hub M2 or with the third hub M3.

The selection of one of the two variants may depend, for example, on the need to better differentiate the two transmission ratios obtainable with the scheme of the present invention or to differently distribute the dimensions and components of the transmission.

According to a further preferred aspect of the invention, the free ends of the HS half-shafts are connected to the respective wheels by coaxial or parallel-axis RD reducers, which are entirely optional.

Preferably, the Dif differential is equipped with a DL locking device that prevents the two axle shafts supported by the differential from rotating at different speeds. This locking device makes the axle shafts integral with the differential housing, thus providing the differential locking function used when one of the two wheels is in low-grip conditions, for example due to ice or mud, etc., to transfer torque to the opposite wheel with grip, thus allowing the vehicle to regain traction.

When the axle includes two electric motors, EM1 and EM2, the presence of the CL selection devices on both respective intermediate shafts allows the two electric motors to be driven simultaneously or by just one of the two electric motors, leaving the other disconnected. This function can ensure not only greater transmission efficiency, for example, when driving on the highway at low power, but also traction in the event of a failure of one of the two electric motors by disconnecting the faulty electric motor. Simultaneous torque transmission is also possible with both electric machines operating simultaneously, with one intermediate shaft transmitting torque to one input of the planetary gear train and the other intermediate shaft transmitting torque to the same or the other input of the planetary gear train.

Evidently, it is possible to operate both electric machines so as to perform successive gear changes, ensuring torque is supplied to the differential during the same gear changes, implementing the function commonly referred to as "hidden shift."

If the selector devices are of the clutch type, then a constant torque value can be guaranteed during successive gear changes between the same or both electric machines, implementing the function commonly referred to as "powershift."

The first center distance, between the first shaft of the first electric machine and its respective first intermediate shaft, and the second center distance, between the second shaft of the second electric machine and its respective second intermediate shaft, can be the same or different.

Similarly, the third center distance, between the first intermediate shaft and the axle defined by the half-shafts, and the fourth center distance, between the second intermediate shaft and the axle defined by the half-shafts, can be the same or different.

When the first and second center distances are equal, and the third and fourth center distances are simultaneously equal, varying only the diameter of one of the pinions and its input gear IN, advantageously, results in a total of four different transmission ratios.

The two electric machines can also be the same or different in terms of torque/power, type, and overall dimensions. Furthermore, the energy regeneration function can be implemented by recovering kinetic energy during braking, making the electric machine function as an electrical generator. The amount of recoverable energy can be adjusted both by controlling the electric machines and by controlling their mechanical connection to the differential using the CL selection devices.

A sailing function can also be implemented, which disconnects both electric motors while driving when the driver releases the accelerator pedal, thus reducing mechanical losses due to dragging of the transmission components.

Finally, a vehicle towing function can be implemented, in which both electric motors are disconnected from the differential, thus allowing easier towing of the vehicle without rotation of the electric motors and with a more limited number of rotating transmission components. Variants to the non-limiting example described are possible, without departing from the scope of protection of the present invention, including all embodiments equivalent to the claims for a person skilled in the art.

From the above description, a person skilled in the art is able to realize the object of the invention without introducing further construction details.

## Claims

1. Electric axle (EA) for industrial or commercial vehicles comprising:
- a differential (Dif) equipped with an input port and half-shafts (HS) to rotate corresponding vehicle wheels (W),
- a first electric machine (EM1, EM2), off-axis, having a drive shaft to which a first pinion (P) is keyed to transmit a rotational motion to the input port of the differential,
- a first intermediate shaft (ChS, ChS2), in which the first intermediate shaft comprises a first shaft (S1) to which
+ an input wheel (IN) is fixed, operatively associated with said pinion (P),
+ a first (1) and a second (2) drive wheel are keyed for rotation,
+ a selection device (CL) is provided to alternately lock said first or second drive wheel with the first shaft (S1),
- an epicyclic gear train (PG) coaxial with said half-shafts (HS) comprising a single output port (SC) coinciding with said input port of the differential, a first input port (3) operatively connected to the first drive wheel (1) and a second input port (4) operatively connected to the second drive wheel (2), wherein the first input port defines a sun gear (S) and the second input port coincides with said single output port and with a planet carrier of the epicyclic gear train.

2. Axle according to claim 1, wherein the selection device is a non-absolute type of radial or front tooth clutch, arranged between said first and second drive wheels or is a synchronized, i.e. absolute, clutch cone clutch or is a clutch device configured to perform a powershift function, or is in the form of an axially sliding sleeve with radial teeth arranged laterally with respect to said first and second drive wheels.

3. Axle according to claim 1 or 2, wherein said input wheel (IN) and said pinion (P) lie in a plane of alignment (K) and wherein said differential and said first and second drive wheels are housed in the same first half-space identified by said plane of alignment.

4. Axle according to claim 3, wherein said first electric machine is also housed in said first half-space.

5. Axle according to claim 1 or 2, wherein said input wheel (IN) and said pinion (P) lie in a plane of alignment (K) and wherein said differential is housed in a first half-space identified by said plane of alignment (K) and said first and second drive wheels are housed in a second half-space, different from the first.

6. Axle according to claims 3 - 5, wherein said selection device (CL) is arranged between said first and second drive wheels.

7. Axle according to any of claims 1 - 5, wherein said input wheel (IN) and said pinion (P) lie in a plane of arrangement (K) and wherein said differential and one of said first or second transmission wheel are housed in a first half-space identified by the plane of arrangement (K), and in a second half-space, different from the first, the other of said second or first transmission wheel and said selection device are housed.

8. Axle according to any of claims 1, 2 or 5, wherein the first intermediate shaft (ChS, ChS2) comprises
- said first shaft (S1) on which said input wheel (IN) is fixed at a first end and a sliding sleeve (MM) at a second end opposite the first end,
- a first hollow shaft (S2), coaxial and external to the shaft (S1), on which the second drive wheel (2) is fixed at a first end and a first hub (M1) at a second end, opposite the first end,
- a second hollow shaft (S3), coaxial and external to the first hollow shaft (S2), on which the first drive wheel (1) is fixed at a first end and the second hub (M2) at a second end, opposite the first end,
- the selection device (CL), comprises said sliding sleeve (MM) suitable for selectively rotating the first shaft (S1) with the first hub (M1) or with the second hub (M2).

9. Axle according to any of claims 1 - 4, wherein the first intermediate shaft (ChS, ChS2) comprises
- said first hollow shaft (S1), on which said input wheel (IN) is fixed at a first end and a first hub (M1) at a second end opposite to the first,
- a second hollow shaft (S2), coaxial and internal to the first hollow shaft (S1), on which the first drive wheel (1) is fixed at a first end and a second hub (M2) at a second end, opposite to the first,
- a third shaft (S3), coaxial and internal to the first and second hollow shafts, on which the second drive wheel (2) is fixed at a first end and the third hub (M3) at a second end, opposite to the first,
- the selection device (CL) comprises a sliding sleeve (MM) suitable for selectively rotating the first hub (M1) with the second hub (M2) or the third hub (M3).

10. Axle according to claim 8 or 9, wherein said selection device (CL) is arranged in a second half-space opposite the first half-space.

11. Axle according to any of claims 1, 2 or 7, wherein the first intermediate shaft (ChS, ChS2) comprises
- said first hollow shaft (S1), on which said input wheel (IN) is fixed at a first end and a first hub (M1) at a second end opposite to the first,
- a second hollow shaft (S2), coaxial and external to the first hollow shaft (S1), on which the first drive wheel (1) is fixed at a first end and a second hub (M2) at a second end, opposite to the first,
- a third shaft (S3), coaxial and internal to the first and second hollow shafts, on which the second drive wheel (2) is fixed at a first end and the third hub (M3) at a second end, opposite to the first,
- the selection device (CL), comprises a sliding sleeve (MM) suitable for selectively connecting in rotation the first hub (M1) with the second hub (M2) or with the third hub (M3).

12. Axle according to claim 11, wherein said second or first drive wheel arranged in said second half-space is intermediate between said bearing plane (K) and said selection device.

13. Axle according to any of the preceding claims, wherein said first input port is defined by said sun gear (S) supported by a third hollow shaft (SX) coaxial with one of said half-axles (HS) on which a first driven wheel (3) is fixed, configured to mesh with said first drive wheel (1).

14. Axle according to any of the preceding claims, wherein said second input port is defined by said planet carrier (SC) configured to support a second driven wheel (4) configured to mesh with said second drive wheel (2).

15. Axle according to claims 12 and 13, wherein said first and second driven wheels are arranged parallel to each other or parallel and side by side.

16. An axle according to any of claims 1 to 15, further comprising a second electric machine (EM2) operatively connected to said epicyclic gear train (PG) by means of a respective second intermediate shaft (ChS2) similar to said first intermediate shaft and preferably identical to said first intermediate shaft.

17. An axle according to any of the preceding claims, wherein each half-shaft (HS) is connected to a respective wheel by means of a reduction gear (RD).

18. An axle according to any of the preceding claims, wherein said differential (Dif) is equipped with a locking device (DL) arranged to rotate the half-shafts together.

19. An industrial or commercial vehicle comprising an electric axle according to any of claims 1 to 18.
